# EUROPEAN PATENT SPECIFICATION

(11) **EP 3 046 227 B1**
(45) Date of publication and mention of the grant of the patent: **28.04.2021**
(21) Application number: 15200011.3
(22) Date of filing: 15.12.2015
(51) Int. Cl.: H02K 1/27, H02K 7/14, B63H 23/24, F03B 17/06, H02K 7/18

(54) **ELECTRIC MACHINES**
ELEKTRISCHE MASCHINEN
MACHINES ÉLECTRIQUES

(30) Priority: 14.01.2015 GB 201500527
(43) Date of publication of application: 20.07.2016
(73) Proprietor: Rolls-Royce Power Engineering PLC, Derby DE24 8BJ (GB)
(72) Inventor: Williams, Craig D, Derby, Derbyshire DE24 8BJ (GB); Thompson, Alexander, Derby, Derbyshire DE24 8BJ (GB); McKay, Paul, Derby, Derbyshire DE24 8BJ (GB)
(74) Representative: Rolls-Royce plc

(56) References cited:
- GB-A- 2 482 689
- JP-A- H05 223 086
- US-A- 3 719 436
- US-A1- 2003 186 601
- US-A1- 2012 148 424
- US-A1- 2015 004 032

## Description

### Field of the Invention

The present invention relates to electric machines. In particular, a rim driven permanent magnet tunnel thruster.

### Background of the Invention

A rim driven thruster can be thought of as a permanent magnet (PM) motor which comprises a rotor assembly running in an outer stator. The rotor assembly incorporates a multi-blade, typically bi-directional, impeller onto which the permanent magnets are mounted. The stator is powered so as to provide a rotating magnetic flux which interacts with the magnetic field of the permanent magnet rotor assembly causing it to rotate within the stator. The rotating magnetic flux is typically generated by a suitable electromagnet provided on the stator, for example a suitably arranged set of windings or coils e.g. distributed in slots around the stator.

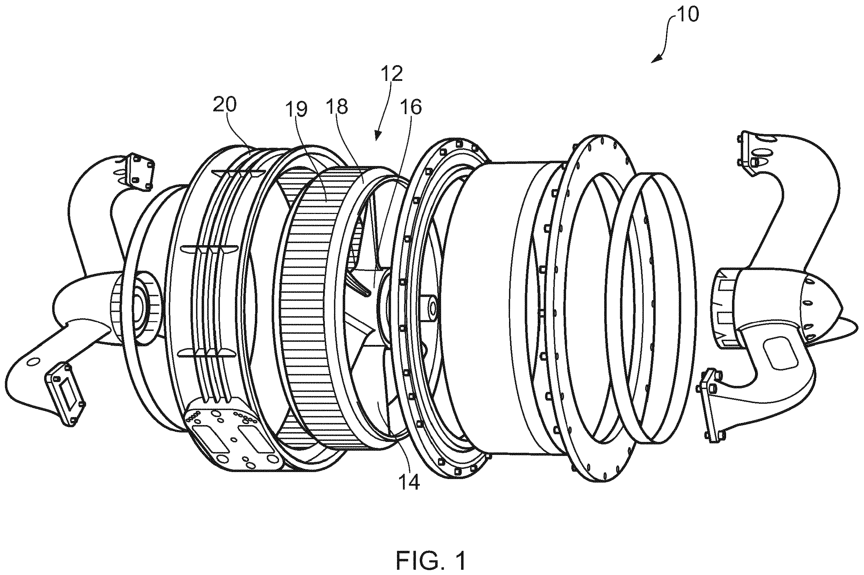

A rim driven thruster 10 is shown in Figure 1. In thrusters 10, the rotor assembly 12 includes an impeller 14 having blades extending between a hub 16 and an outer perimeter element 18. The rotor assembly 12 is rotatable about an axis of rotation. Outer perimeter element 18 supports directly thereon an array 19 of permanent magnets around the axis of rotation of the rotor assembly 12.

The thruster 10 also includes a stator assembly 20. Stator assembly 20 includes one or more electromagnets for generating a rotating magnetic flux to interact with the permanent magnets of the array 19, thereby causing the rotor assembly to rotate about its axis of rotation (relative to the stator assembly 20).

The impeller 14 and the array 19 of electromagnets are arranged concentrically about the axis of rotation of the rotor assembly.

Furthermore, the outer perimeter member 18 for supporting the array 19 is integrally formed with the impeller. Thus the outer perimeter member 18 forms a portion of the impeller 14.

Over time, the blades of the impeller 14 may become damaged or worn, and thus may require replacement. Replacing the impeller 14 of a prior art thruster is potentially hazardous to the user, time consuming and expensive because the array 19 cannot readily and safely be transferred from the damaged or worn impeller to the replacement impeller. Therefore, the array 19 is typically discarded together with the damaged or worn impeller, not only adding significant cost to the operation of replacing the impeller, but also increasing the waste associated with the replacement of the impeller.

US2015/0004032 relates to a wet rotor pump with an axial flux motor that includes a stator, a containment shell and a rotor. US2003/0186601 relates to a thruster for use in underwater applications, including a stator assembly having an encapsulated set of coils and a rotor assembly having an encapsulated set of permanent magnets. JP05223086 relates to a pump device without a rotary shaft. US2012/0148424 relates to a rim driven electrical machine for interaction with a flow of water. US Patent No. 3,719,436 describes an axial flow pump. The pump includes a housing supporting a tubular electric motor driven pump body for rotation about an axis, and a plurality of impeller units detachably supported within the tubular pump body.

### Summary of the Invention

The scope of protection is defined by the appended claims, to which reference should now be made.

The present invention proposes a rim driven permanent magnet thruster as set forth in claim 1.

Accordingly, because the impeller can be detached from the drive body, a damaged or worn impeller can be replaced more easily and quickly than the prior art, because the existing drive body can simply be attached to the replacement impeller. There is no need to interfere with the arrangement of the magnetic element(s) provided on the drive body.

Indeed, where the electrical machine may be used for multiple applications, the impeller itself may need changing because different blade configurations may be needed for the different applications. The present invention facilitates efficient and safe swapping of the impellers.

In an unclaimed embodiment where the electrical machine is a generator, the present disclosure preferably provides a generator including: a stator; and a rotor assembly rotatably mounted within the stator, the rotor assembly having an impeller, and a drive body including one or more magnetic elements; wherein the stator includes one or more electromagnets for electromagnetic interaction with the one or more magnetic elements, where rotation of the rotor assembly (for example by passing a fluid through the impeller) induces electric current in the one or more electromagnets; and wherein the drive body is detachably coupled to the impeller.

The rim driven thruster of the present disclosure preferably provides a motor including: a stator; and a rotor assembly rotatably mounted within the stator, the rotor assembly having an impeller, and a drive body including one or more magnetic elements; wherein the stator includes one or more electromagnets to provide magnetic flux for interaction with the one or more magnetic elements to cause rotation of the rotor assembly; and wherein the drive body is detachably coupled to the impeller. In other words, electromagnetic torque is applied to the drive body (which includes the magnetic elements) to rotate the rotor assembly.

In the present disclosure the one or more electromagnets may be windings, or coils, through which electrical current is able to flow. For example, the windings may be wound conductive wires. The windings are preferably arranged on the stator. The windings are arranged on the stator to drive the rotation of the rotor by providing magnetic flux for interaction with the magnetic elements, e.g. permanent magnets, provided on the rotor. In an unclaimed embodiment where the electrical machine is a generator, the windings are arranged on the stator to have current flow induced therein by the rotating magnetic flux provided by the magnetic elements, e.g. permanent magnets, provided on the rotor as the rotor is caused to rotate.

The drive body is detachably coupled to the impeller so as to be located axially upstream thereof, relative to the intended flow of fluid through the impeller.

By arranging the drive body upstream of the impeller, the drive body and impeller are typically urged together in use, as fluid flows through the thruster. In other words, advantageously, the coupling connection between impeller and drive body is under compression not tension, and thus the impeller and the drive body will resist mutual accidental detachment even under extreme operating conditions.

Furthermore, locating the drive body in the form of a tube upstream of the impeller improves the fluid flow into the impeller itself. The bore (lumen) of the tube may be suitably shaped to improve the fluid flow into the impeller. Vanes may be provided in the bore of the tube, for example.

The impeller may include a plurality of impeller blades extending radially with respect to the rotational axis of the rotor assembly. The impeller may include an annular housing, each of the plurality of impeller blades being attached at their radially outer tips to the annular housing.

The drive body is detachably coupled to the annular housing of the impeller. The impeller may include a hub. Each of the plurality of blades may be attached to the hub.

The one or more magnetic elements include one or more permanent magnets, for example arranged generally circumferentially around the drive body. The magnetic elements may be arranged on the radially outer surface of the drive body. The magnetic elements may be arranged on the drive body to be supported thereon by an intermediate substrate.

The impeller is configured to provide at least one of an axial and a radial bearing surface.

A cap member may be provided. The cap member may be detachably coupled to the drive body at the opposite end of the drive body to which the impeller is detachably coupled.

The cap member may be formed to be an axially extending annular member through which fluid is able to flow, for example into/from the bore of the tube of the drive body. Fluid is also able to flow to/from the bore of the tube from/to the impeller.

The cap member may be configured to provide at least one of an axial and a radial bearing surface.

The or each bearing surface allows free rotation of the rotor assembly.

### Brief Description of the Drawings

Embodiments of the invention will now be described by way of example with reference to the accompanying drawings in which:
Figure 1 shows a driven tunnel thruster; and
Figure 2 shows a rotor assembly for a rim driven thruster according to an embodiment of the present invention.

### Detailed Description

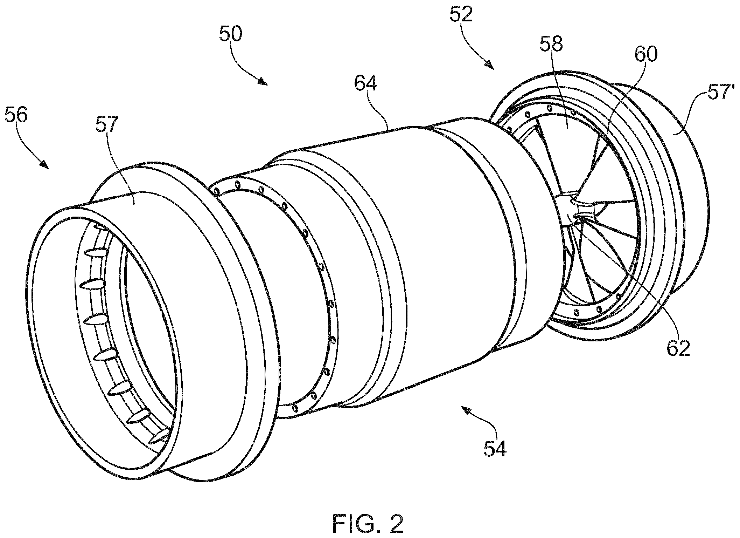

A rotor assembly 50 for a rim driven thruster is shown in Fig. 2. The rotor assembly 50 includes an impeller 52, a central rotor tube 54 and a bearing cap 56.

The impeller 52 may be referred to as a propeller. Impeller 52 includes a plurality of blades 58 extending radially with respect to the axis of rotation of the impeller. Impeller 52 includes a blade housing 60 in the form of a ring or tube arranged generally circumferentially around the blades 58. Each blade is attached at its radially outer region to the housing 60. The housing 60 may be described as an axially extending annular housing. In the embodiment shown, the impeller includes an optional hub 62 portion to which each of the blades 58 is attached. The hub 62 is located in the region of the axis of rotation of the impeller 52. Advantageously, when a hub is not present, the probability of entangling debris on the propeller decreases. However, for certain applications the hub is preferable to decrease the risk of the impeller blades bending.

The blades and housing (and hub if present) are preferably integrally formed to provide an impeller in the form of an (unitary) integral body.

It is not necessary for the impeller 52 to include any magnetic elements, for example it is not necessary for permanent magnets to be mounted on the impeller as in the prior art.

Instead, a rotor assembly includes a rotor tube 54, on which provides the magnetic elements 64, e.g. permanent magnets, necessary for the operation of the rim driven thruster. The magnetic elements 64 may be provided as a circumferential array arranged on the radially outermost surface of the rotor tube 54 for example. However, the magnetic elements 64 may be incorporated into the rotor tube itself. For example, the rotor tube may be formed to include magnetic material.

The rotor tube 54 acts as a conduit for guiding fluid flowing to or from the impeller.

Rotor tube 54 can be described as an axially extending annular body. Rotor tube 54 is preferably shaped as a (hollow) cylinder for example. In the present application an annular body need not have a circular cross-section, albeit that a circular cross-section may be preferred.

The rotor tube 54 is detachably coupled to the impeller 52 such that movement of the rotor tube 54 results in corresponding movement of the impeller 52 (and vice versa). In particular, rotation of the rotor tube 54 about its long axis results in a corresponding rotation of the impeller 52 about its axis of rotation (and vice versa). There is preferably no slippage between the rotation of the rotor tube and the rotation of the impeller. The long axis of the rotor tube 54 and the axis of rotation of the impeller 52 are coaxial. The long axis of the rotor tube 54 can be thought of as its axis of rotation. The axis of rotation of the impeller 52 is coaxial with the axis of rotation of the rotor assembly 50.

The dimensions of the rotor tube 54 may allow it to be coupled to the blade housing 60. The rotor tube 54 and impeller 52 may be suitably configured to be bolted together, for example the rotor tube 54 and the blade housing 60 may be suitably configured to be bolted together. Thus, Fig. 2 shows a plurality of bolt holes formed circumferentially around the rotor tube facing surface of the blade housing 60. Complementary bolt holes may be formed around the impeller facing end face of the rotor tube 54. Accordingly, the impeller 52 and rotor tube 54 are readily attachable to, and detachable from, one another. Other techniques for detachably coupling together the impeller 52 and rotor tube 54 may be employed.

Therefore, when it is necessary to replace the impeller 52, for example because of wear, damage or erosion, the rotor tube 54 can be detached from the impeller 52 and re-attached to a new or repaired impeller 52.

This is advantageous because the magnetic elements 64, e.g. permanent magnets, required for operation of the rim driven thruster are provided on the rotor tube 54, not on the impeller 52. Due to this arrangement, the magnetic elements 64 need not be interfered with when the impeller is replaced or repaired. Furthermore, the magnetic elements 64 can effectively be reused in conjunction with the replacement or repaired impeller, rather than being discarded. This reduces waste, and reduces the costs associated with replacing or repairing the impeller.

Indeed, the magnetic elements 64 are not subject to potential damage as a result of any repair operations performed on the impeller. Furthermore, there is no need to remove the magnetic elements 64 from the worn or damaged impeller and install them on the new impeller, which is undesirable because of the potentially hazardous nature of the magnetic elements and because of the potential for the magnetic elements to be damaged during the transfer.

These advantages can be contrasted with the arrangement shown in Fig. 1, where the array 19 is typically discarded, and a new impeller 14 provided together with a new array 19, when the impeller is subject to replacement.

Where the impeller 14 of Figure 1 is repaired rather than replaced, the array 19 is typically not removed when effecting the repair, because of the hazardous nature of the magnetic elements and because it is often prohibitively time consuming to do so. However, this means that the repair operation may result in damage to one or more of the permanent magnets of the array 19.

The arrangement of Figure 2 overcomes these problems by allowing the magnetic elements 64 to be readily de-coupled from the impeller 52 in a safe and efficient manner.

The rotor tube 54 and the impeller 52 are coaxial, but the rotor tube 54 may be located axially upstream or downstream of the impeller. In other words, the rotor tube 54 is not concentric with the impeller 52.

In use, the rotor tube 54 may serve as the inlet to the impeller 52 (it is located upstream of the impeller) or it may serve as the discharge to the impeller 52 (it is located downstream of the impeller).

According to the claimed invention, the rotor tube 54 is located upstream of the impeller 52. This is because the action of the impeller in drawing the fluid through the rotor tube 54 and discharging it will compress the rotor tube 54 and impeller 52 together. Thus, in use, the interface between the impeller 52 and rotor tube 54 will be under compression. This helps to seal the interface, or joint, between the impeller 52 and rotor tube 54. It also alleviates tension in the means used to couple (detachably) the impeller 52 and rotor tube 54 together. For example, where the impeller 52 and rotor tube 54 are bolted together, the bolts will not be under significant additional tension from application induced loading, when the rotor tube 54 is located upstream of the impeller 52. Rather, they will be under compression. This assists to maintain long term integrity of the coupling between the impeller 52 and rotor tube 54.

In a rim driven thruster incorporating a rotor assembly similar to that of Figure 2, the (electromagnetic) drive assembly providing the (rotating) magnetic flux for interaction with the permanent magnets is also axially offset relative to the impeller so as to align with the permanent magnets provided on the rotor tube 54 for efficient operation.

The drive assembly can be a drive assembly as used in the prior art, for example electromagnetic coils or windings for producing the required magnetic flux. In essence, the drive assembly drives the rotor assembly via the interaction of the rotating magnetic flux generated by the drive assembly and the magnetic field provided by the permanent magnets arranged on the rotor. The skilled person knows how to arrange the drive assembly on the stator and the magnetic elements 64 (e.g. permanent magnets) on the rotor tube 54 to achieve suitable rotation of the impeller 52.

The rotor tube 54 may be suitably configured to provide one or more bearing surfaces 57, for cooperative engagement with a corresponding bearing surface provided by the stator, to allow the rotor assembly 50 to rotate therein.

However, a bearing cap 56 may be provided for this purpose. Bearing cap 56 is preferably detachably coupled to the rotor tube 54, at the opposite end of the rotor tube 54 to the impeller 52. For example, bearing cap 56 may be detachably coupled to the rotor tube 54 in the same way that the impeller is detachably coupled to the rotor tube 54, for example by bolts.

Bearing cap 56 includes one or more bearing surfaces 57, e.g. a bearing race way, for cooperative engagement with suitable bearing surface(s) provided by the stator, such that the rotor tube 54 is rotatable within the stator.

The impeller 52 is also configured to include one or more bearing surfaces 57', e.g. a bearing race way, for engagement with a suitable bearing surface(s) provided e.g. by the stator, such that the rotor tube 54 is rotatable within the stator.

The bearing surfaces 57 and 57' may therefore be provided respectively axially upstream and downstream of the rotor tube 54.

Advantageously, if the bearing surface 57' provided by the impeller 52 and/or if the bearing surface 57 provided by the bearing cap 56 is damaged or worn, the impeller 52 and/or the bearing cap 56 can be replaced quickly and efficiently without risk of damaging the magnetic elements for example.

The bearing surfaces 57 and 57' may provide radial and/or axial bearing surfaces.

Rotor assemblies for rim driven thrusters which incorporate the impeller and permanent magnets, are high value components due to the materials, manufacturing techniques and assemblies involved. While in service the impeller is likely to suffer wear, damage and erosion. For the prior art rotor assemblies, remedial activities to correct any damage or wear involves the removal of the complete rotor assembly from the machine which risks damaging the fragile permanent magnets for example. Indeed, if the damage to the impeller is sufficient to require a new impeller to be installed this effectively means that the entire prior art rotor assembly must be rebuilt from scratch, including configuration of the permanent magnets and associated protective composite banding. The described embodiments overcomes these problems by allowing the impeller to be readily detached from the rotor tube, and repaired/replaced as needs be. Thus, the other components of the rotor assembly can simply be re-used.

## Claims

1. A rim driven permanent magnet thruster comprising:
a stator; and
a rotor assembly (50) rotatably mounted within the stator;
the rotor assembly having an impeller (52), and
a drive body (54) including one or more permanent magnets (64);
wherein the stator includes one or more electromagnets for electromagnetic interaction with the one or more permanent magnets (64) to cause rotation of the rotor assembly (50); and
wherein the drive body (54) includes an axially extending tube, arranged coaxially with the impeller (52); and
wherein the one or more electromagnets are arranged on the stator generally circumferentially around, and radially outwards of, the one or more magnetic elements;
**characterised in that** the drive body (54) is detachably coupled to the impeller (52) to be located axially upstream of the impeller (52), and the impeller (52) is configured to provide at least one of an axial and a radial bearing surface (57').

2. The rim driven thruster according to any one of the preceding claims, wherein the impeller (52) includes a plurality of impeller blades (58) extending radially with respect to the rotational axis of the rotor assembly (50).

3. The rim driven thruster according to any one of the preceding claims, wherein the impeller (52) includes an annular housing (60), each of the plurality of impeller blades (58) being attached at their radially outer tips to the annular housing (60).

4. The rim driven thruster according to claim 3, wherein the drive body (54) is detachably coupled to the annular housing (60) of the impeller (52).

5. The rim driven thruster according to any one of the preceding claims, wherein the impeller (52) includes a hub (62), and each of the plurality of blades (58) is attached to the hub (62).

6. The rim driven thruster according to any one of the preceding claims, wherein the one or more permanent magnets are arranged generally circumferentially around the drive body (54).

7. The rim driven thruster according to any one of the preceding claims, including a cap member (56) detachably coupled to the drive body (54) at the opposite end of the drive body (54) to which the impeller is detachably coupled.

8. The rim driven thruster according to claim 7, wherein the cap member is formed to be an axially extending annular member through which fluid is able to flow.

9. The rim driven thruster according to claim 7 or 8, wherein the cap member (56) is configured to provide at least one of an axial and a radial bearing surface (57).

## Patentansprüche

1. Ringpropeller mit Dauermagnet, umfassend:
einen Stator; und
eine Rotoreinheit (50), die drehbar in dem Stator angebracht ist;
wobei die Rotoreinheit ein Laufrad (52) aufweist, und
einen Antriebskörper (54), der einen oder mehrere Dauermagneten (64) aufweist;
wobei der Stator einen oder mehrere Elektromagneten für eine elektromagnetische Interaktion mit dem einen oder mehreren Dauermagneten (64) aufweist, um eine Rotation der Rotoreinheit (50) zu bewirken; und
wobei der Antriebskörper (54) ein sich axial erstreckendes Rohr aufweist, das koaxial zu dem Laufrad (52) angeordnet ist; und
wobei der eine oder die mehreren Elektromagneten an dem Stator allgemein umfänglich um und radial auswärts des einen oder der mehreren Magnetelemente angeordnet sind;
**dadurch gekennzeichnet, dass** der Antriebskörper (54) trennbar mit dem Laufrad (52) gekoppelt ist, so dass er axial stromaufwärts des Laufrads (52) angeordnet werden kann, und wobei das Laufrad (52) so gestaltet ist, dass es mindestens eine axiale und/oder eine radiale Lageroberfläche (57') bereitstellt.

2. Ringpropeller nach einem der vorstehenden Ansprüche, wobei das Laufrad (52) eine Mehrzahl von Laufradflügeln (58) aufweist, die sich im Verhältnis zu der Rotationsachse der Rotoreinheit (50) radial erstrecken.

3. Ringpropeller nach einem der vorstehenden Ansprüche, wobei das Laufrad (52) ein ringförmiges Gehäuse (60) aufweist, wobei jeder der Mehrzahl von Laufradflügeln (58) an dessen radial äußeren Spitze an dem ringförmigen Gehäuse (60) angebracht ist.

4. Ringpropeller nach Anspruch 3, wobei der Antriebskörper (54) lösbar mit dem ringförmigen Gehäuse (60) des Laufrads (52) gekoppelt ist.

5. Ringpropeller nach einem der vorstehenden Ansprüche, wobei das Laufrad (52) eine Nabe (62) aufweist, und wobei jeder der Mehrzahl von Flügeln (58) an der Nabe (62) angebracht ist.

6. Ringpropeller nach einem der vorstehenden Ansprüche, wobei der eine oder mehrere Dauermagneten allgemein umfänglich um den Antriebskörper (54) angeordnet sind.

7. Ringpropeller nach einem der vorstehenden Ansprüche, der ein Kappenelement (56) aufweist, das an dem entgegengesetzten Ende des Antriebskörpers (54), an dem das Laufrad lösbar gekoppelt ist, lösbar mit dem Antriebskörper (54) gekoppelt ist.

8. Ringpropeller nach Anspruch 7, wobei das Kappenelement als ein sich axial erstreckendes ringförmiges Element ausgebildet ist, durch das Fluid strömen kann.

9. Ringpropeller nach Anspruch 7 oder 8, wobei das Kappenelement (56) so gestaltet ist, dass es mindestens eine axiale und/oder eine radiale Lageroberfläche (57) bereitstellt.

## Revendications

1. Propulseur à aimant permanent de type rim-driven, comprenant :
un stator ; et
un ensemble rotor (50) monté en rotation à l'intérieur du stator ;
l'ensemble rotor ayant une roue (52), et
un corps d'entraînement (54) comprenant au moins un aimant permanent (64) ;
le stator comprenant au moins un électroaimant pour une interaction électromagnétique avec au moins un aimant permanent (64) pour provoquer la rotation de l'ensemble rotor (50) ; et
le corps d'entraînement (54) comprenant un tube s'étendant axialement, disposé coaxialement avec la roue (52) ; et
l'au moins un électroaimant étant disposé sur le stator généralement circonférentiellement autour, et radialement à l'extérieur, de l'au moins un élément magnétique ;
**caractérisé en ce que** le corps d'entraînement (54) est accouplé de manière amovible à la roue (52) pour être situé axialement en amont de la roue (52), et la roue (52) est conçue pour fournir au moins une d'une surface d'appui axiale et radiale (57').

2. Propulseur de type rim-driven selon l'une quelconque des revendications précédentes, la roue (52) comprenant une pluralité d'aubes de roue (58) s'étendant radialement par rapport à l'axe de rotation de l'ensemble rotor (50).

3. Propulseur de type rim-driven selon l'une quelconque des revendications précédentes, la roue (52) comprenant un boîtier annulaire (60), chacune de la pluralité des aubes de roue (58) étant fixée au niveau de ses extrémités radialement extérieures au boîtier annulaire (60).

4. Propulseur de type rim-driven selon la revendication 3, le corps d'entraînement (54) étant accouplé de manière amovible au boîtier annulaire (60) de la roue (52).

5. Propulseur de type rim-driven selon l'une quelconque des revendications précédentes, la roue (52) comprenant un moyeu (62), et chacune de la pluralité d'aubes (58) étant fixée au moyeu (62).

6. Propulseur de type rim-driven selon l'une quelconque des revendications précédentes, l'au moins un aimant permanent étant disposé généralement circonférentiellement autour du corps d'entraînement (54).

7. Propulseur de type rim-driven selon l'une quelconque des revendications précédentes, comprenant un élément de capuchon (56) accouplé de manière amovible au corps d'entraînement (54) au niveau de l'extrémité opposée du corps d'entraînement (54) auquel la roue est accouplée de manière amovible.

8. Propulseur de type rim-driven selon la revendication 7, l'élément de capuchon étant formé pour être un élément annulaire s'étendant axialement à travers lequel le fluide peut s'écouler.

9. Propulseur de type rim-driven selon la revendication 7 ou 8, l'élément de capuchon (56) étant conçu pour fournir au moins une des surfaces d'appui axiale et radiale (57).
